# EUROPÄISCHE PATENTSCHRIFT

(11) **EP 3 882 688 B1**
(45) Veröffentlichungstag und Bekanntmachung des Hinweises auf die Patenterteilung: **03.01.2024**
(21) Anmeldenummer: 21151766.9
(22) Anmeldetag: 15.01.2021
(51) Int. Cl.: G02C 5/22

(54) **FEDERSCHARNIER FÜR EINE BRILLE**
SPRING HINGE FOR SPECTACLES
CHARNIÈRE À RESSORT POUR LUNETTES

(30) Priorität: 17.03.2020 AT 502282020
(43) Veröffentlichungstag der Anmeldung: 22.09.2021
(73) Patentinhaber: REDTENBACHER Präzisionsteile Ges.m.b.H., 4644 Scharnstein (AT)
(72) Erfinder: Almhofer, Daniel, 4643 Pettenbach (AT)
(74) Vertreter: Hübscher & Partner Patentanwälte GmbH

(56) Entgegenhaltungen:
- EP-A1- 1 821 132
- EP-A1- 2 023 184
- EP-A2- 0 426 947
- EP-B1- 0 426 947
- EP-B1- 1 821 132
- EP-B1- 2 023 184
- WO-A1-01/31386
- WO-A1-2011/103949
- WO-A1-2011/121522
- DE-A1-102008 023 829
- DE-A1-102014 223 150
- US-A1- 2019 129 201

## Beschreibung

Die Erfindung bezieht sich auf ein Federscharnier für eine Brille mit einem Gehäuse und mit einem in einer Gehäuseausnehmung verschiebbar geführten, ein Scharnierelement tragenden, U-förmigen Gleitstück, das zwischen seinen beiden Schenkeln eine Schraubenfeder aufnimmt, die sich mit einem Ende an einem die beiden Schenkel verbindenden Steg und mit dem anderen Ende an einem zwischen den beiden Schenkeln geführten Widerlager abstützt, das aus einer Entriegelungsstellung in eine Verriegelungsstellung ausschwenkbar ist und in der ausgeschwenkten Verriegelungsstellung eine Hinterschneidung des Gehäuses hintergreift.

Bei Federscharnieren für Brillen mit einem ein Scharnierelement tragenden, U-förmigen Gleitstück, das zwischen seinen Schenkeln eine Schraubenfeder aufnimmt, die sich mit einem Ende an einem die beiden Schenkel verbindenden Steg und mit dem anderen Ende an einem zwischen den beiden Schenkeln geführten Widerlager abstützt, ist es bekannt (AT 502 196 B1), das Widerlager durch eine zur Schraubenfeder koaxiale Durchtrittsöffnung im Scharnierelement hindurch in das das Gleitstück verschiebbar aufnehmende Gehäuse einzusetzen und in ein Muttergewinde des Gehäuses einzuschrauben. Um eine vormontierbare Montageeinheit aus dem das Scharnierelement tragenden Gleitstück, der zwischen den Schenkeln des Gleitstücks angeordneten Feder und dem Widerlager zu erhalten, kann das quer zur Verschieberichtung zwischen die Schenkel des Gleitstückes eingesetzte Widerlager einen größeren Durchmesser als die im Scharnierlappen vorgesehene Durchtrittsöffnung zum Einführen eines Werkzeuges zur Drehverstellung des Widerlagers aufweisen, das mit dem Gehäuse nach Art eines Bajonettverschlusses zusammenwirkt (EP 2 023 184 A1).

Um einfachere Konstruktionsbedingungen zu schaffen, ist es bekannt (WO 2009/132809 A1), die beiden Schenkel des Gleitstücks zu zwei Scharnierlappen zu verlängern und das zwischen den Schenkeln geführte Widerlager durch die hierfür als Biegefeder wirksame Schraubenfeder mit einem Drehmoment um eine Querachse vorzuspannen, sodass nach dem Einsetzen des Gleitstücks in die Gehäuseausnehmung das gegen die Vorspannkraft in eine Entriegelungsstellung verschwenkte Widerlager zwischen den Schenkeln des Gleitstücks in das Gehäuse eingeführt werden kann, bis das Widerlager von der Einführöffnung des Gehäuses freigegeben wird und bedingt durch die Vorspannung in eine Verriegelungsstellung ausschwenkt, in der das Widerlager eine Hinterschneidung des Gehäuses hintergreift.

Der mit einer solchen Konstruktion verbundene Nachteil, dass bei einer Vormontage das Widerlager lediglich durch das Ende der Schraubenfeder gehalten wird und die Schraubenfeder erst nach dem Einsetzen des Gleitstücks in das Gehäuse mit dem Einführen des Widerlagers vorgespannt werden kann, kann durch ein anderes bekanntes Federscharnier (US 2019/0129201 A1) ausgeräumt werden, indem das Widerlager durch zwei seitliche Führungsansätze in zwei Langlöchern der Schenkel des Gleitstücks geführt und durch eine gesonderte Feder mit einem Verriegelungsmoment um die Führungsansätze als Querachse beaufschlagt wird. Diese Maßnahmen bedingen allerdings einen erheblichen Mehraufwand.

Eine weitere Möglichkeit, eine vormontierte Montageeinheit aus dem Gleitstück, der zwischen den Schenkeln des Gleitstücks gehaltenen Schraubenfeder und dem von der Schraubenfeder beaufschlagten Widerlager zu erhalten, besteht darin (EP 0 426 947 A2), das Widerlager durch die Schraubenfeder in seiner Verriegelungsstellung an das die beiden Schenkel verbindende Scharnierelement angedrückt zu halten, und zwar mithilfe eines Federkolbens. Wird diese vormontierte Montageeinheit entlang der Führung für das Gleitstück in das Gehäuses geschoben, das eine Hinterschneidung für das Widerlager aufweist, so wird das Widerlager unter einer Verlagerung des Federkolbens gegen die Federbeaufschlagung entlang einer Anlauffläche des Gehäuses in eine das Einschieben in das Gehäuse ermöglichende Entriegelungsstellung verschwenkt, aus der das Widerlager im Bereich der Hinterschneidung unter der Federeinwirkung wieder in die diese Hinterschneidung hintergreifende Verriegelungslage rückgeschwenkt wird. Nachteilig ist allerdings der durch den Federkolben bedingte Aufwand, wozu noch kommt, dass das in der vormontierten Montageeinheit aufgrund der Verriegelungsstellung vorstehende Widerlager unter Umständen zusammen mit der Schraubenfeder unbeabsichtigt ausgehebelt werden kann. Außerdem muss das Gehäuse durch das Vorsehen einer geeigneten Anlauffläche für das Widerlager angepasst werden.

Der Erfindung liegt somit die Aufgabe zugrunde, ein Federscharnier mit einer zwischen zwei Schenkeln eines U-förmigen Gleitstücks angeordneten Schraubenfeder, die sich mit einem Ende an einem die beiden Schenkel verbindenden Steg und mit dem anderen Ende an einem zwischen den beiden Schenkeln geführten Widerlager abstützt, so auszugestalten, dass eine einfach handhabbare Montageeinheit aus dem Gleitstück, der vorgespannten Schraubenfeder und dem Widerlager sichergestellt werden kann.

Ausgehend von einem Federscharnier der eingangs geschilderten Art löst die Erfindung die gestellte Aufgabe dadurch, dass das Widerlager in der Entriegelungsstellung durch die Schraubenfeder am die beiden Schenkel des Gleitstücks verbindenden Scharnierelement angedrückt gehalten ist und eine durch eine in Richtung der Schraubenfederachse verlaufende Durchtrittsöffnung im Scharnierelement beaufschlagbare, geneigte Anlauffläche zum Ausschwenken des Widerlagers in die Verriegelungsstellung aufweist.

Zufolge dieser Maßnahmen wird der die Schraubenfeder mit dem Widerlager aufnehmende Raum zwischen den beiden Schenkeln des Gleitstücks einerseits durch den die beiden Schenkel verbindenden Steg und anderseits durch das Scharnierelement axial begrenzt, sodass das quer zu den Schenkeln zusammen mit der vorgespannten Schraubenfeder in diesen Raum eingesetzte Widerlager durch die vorgespannte Schraubenfeder in der Entriegelungsstellung an das Scharnierelement angedrückt gehalten wird, ohne dass es hierfür gesonderter Konstruktionsmaßnahmen bedarf. Es muss lediglich dafür gesorgt werden, dass nach dem Einführen der vormontierten Montageeinheit in die Gehäuseausnehmung das Widerlager aus der Entriegelungsstellung in eine Verriegelungsstellung ausgeschwenkt wird, in der das Widerlager eine Hinterschneidung des Gehäuses hintergreift. Zu diesem Zweck weist das Widerlager auf der dem Scharnierelement zugekehrten Stirnseite eine geneigte Anlauffläche auf, die mittels eines durch eine in Richtung der Schraubenfederachse verlaufende Durchtrittsöffnung im Scharnierelement einführbaren Werkzeugs axial beaufschlagt wird, sodass durch diese axiale Beaufschlagung das Widerlager gegen die Federkraft vom Scharnierelement abgehoben und gegenüber dem Werkzeug entlang der Anlauffläche mit der Wirkung verlagert wird, dass das vom Scharnierelement freigegebene Widerlager aus der Entriegelungsstellung in die Verriegelungsstellung ausschwenkt und die Hinterschneidung des Gehäuses hintergreift. Diese Verriegelungsstellung wird durch die das Widerlager unter Vorspannung beaufschlagende Schraubenfeder gesichert, wenn das Werkzeug, beispielsweise ein Stift, aus der Durchtrittsöffnung zurückgezogen wird.

Um das Widerlager in der vormontierten Montageeinheit vorteilhaft am Scharnierelement abstützen zu können, kann die Anlauffläche des Widerlagers zwischen zwei seitlich neben der Durchtrittsöffnung verlaufenden, gegen das Scharnierelement vorstehenden Anschlagstegen des Widerlagers vorgesehen sein, wobei zwischen diesen Anschlagstegen ausreichend Platz für die geneigte Anlauffläche verbleibt. Der Kraftschluss zwischen diesen Anschlagstegen und dem Scharnierelement reicht üblicherweise zur verschiebefesten Anlage des Widerlagers am Scharnierelement aus. In Sonderfällen könnte aber auch für einen Formschluss gesorgt werden, indem das Scharnierelement einen Verschiebeanschlag bildet, von dem das Widerlager bei seiner axialen Beaufschlagung zum Entriegeln gelöst wird.

Weist das Widerlager ein in der ausgeschwenkten Verriegelungsstellung flächig an der Hinterschneidung des Gehäuses anliegende Rastfläche auf, verläuft also diese Rastfläche unter dem Schwenkwinkel zwischen der Entriegelungsstellung und der Verriegelungsstellung gegenüber den Anlageflächen der Anschlagstege, so ergeben sich vorteilhafte Verhältnisse in Bezug auf die Kraftübertragung zwischen dem Widerlager und dem Gehäuse. Besonders einfache Herstellungsbedingungen können in diesem Zusammenhang dadurch erzielt werden, dass ein Randabschnitt der Anlauffläche des Widerlagers die die Hinterschneidung des Gehäuses hintergreifende Rastfläche bildet, weil in diesem Fall keine gesonderten Bearbeitungen der Anlauffläche und der Rastfläche erforderlich werden. Die Neigung der Anlauffläche entsprechend dem Schwenkwinkel des Widerlagers zwischen Entriegelungsstellung Verriegelungsstellung reicht für eine entsprechende Drehmomentbeaufschlagung des Widerlagers durch ein axial angreifendes Werkzeug üblicherweise aus.

Um den Schwenkwinkel des Widerlagers zwischen der Entriegelungsstellung und der Verriegelungsstellung bei der Beaufschlagung des Widerlagers durch die Schraubenfeder zu berücksichtigen, kann die die Schraubenfeder abstützende Stirnseite des Widerlagers zwei Flächenabschnitte aufweisen, die um den Supplementärwinkel des Schwenkwinkels zwischen Ent- und Verriegelungsstellung zueinander geneigt verlaufen, sodass sich die Schraubenfeder je nach der Drehstellung des Widerlagers an einer dieser dann senkrecht zur Schraubenfederachse verlaufenden Flächenabschnitte flächig abstützen kann.

In der Zeichnung ist der Erfindungsgegenstand beispielsweise dargestellt. Es zeigen
- Fig. 1: eine vormontierte Montageeinheit für ein erfindungsgemäßes Federscharnier in einer Draufsicht,
- Fig. 2: diese Montageeinheit in einem Schnitt nach der Linie II-II der Fig. 1,
- Fig. 3: das Federscharniergehäuse mit eingeführter Montageeinheit in einem Längsschnitt und
- Fig. 4: Das montierte Federscharnier in einem Längsschnitt.

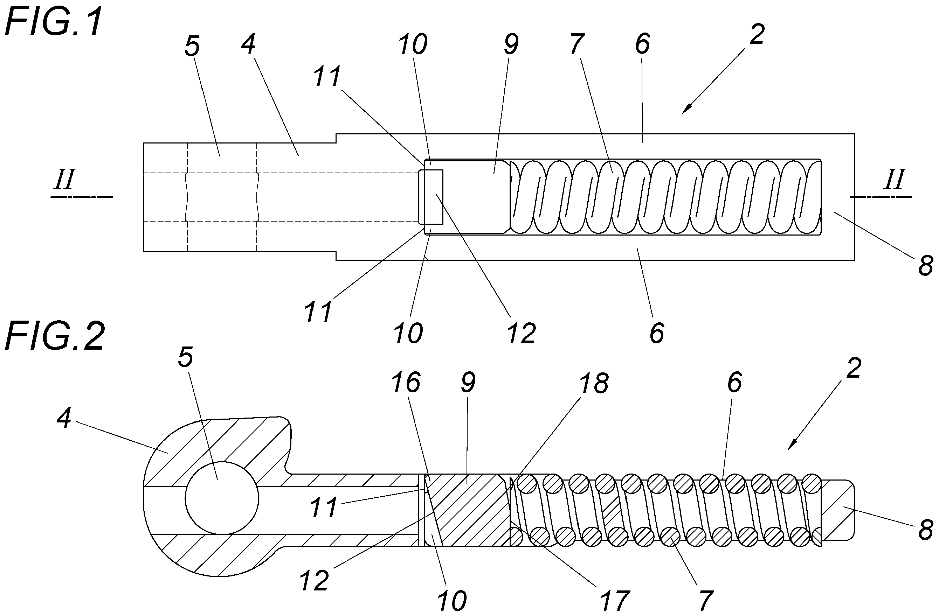

Das dargestellte Federscharnier weist ein an einem Brillenbügel befestigbares Gehäuse 1 auf, in dem ein U-förmiges Gleitstück 2 in einer Gehäuseausnehmung 3 verschiebbar geführt ist. Dieses Gleitstück 2 trägt ein Scharnierelement 4, das im dargestellten Ausführungsbeispiel den mittleren Scharnierlappen eines Scharniers bildet, der zwischen zwei Scharnierlappen des zweiten Scharnierelements eingreift und mit dem zweiten Scharnierelement durch einen die Scharnierelemente in einem Scharnierauge 5 durchsetzenden Scharnierbolzen verbunden ist. Das U-förmige Gleitstück 2 nimmt zwischen seinen Schenkeln 6 eine Schraubenfeder 7 auf, die sich mit einem Ende an einem die beiden Schenkeln 6 verbindenden Steg 8 und mit dem anderen Ende an einem Widerlager 9 abstützt, das zwischen den Schenkeln 6 geführt ist und durch die Schraubenfeder 7 mit einer Druckkraft beaufschlagt wird. In der in den Fig. 1 und 2 dargestellten vormontierten Montageeinheit, die das Gleitstück 2 mit dem Scharnierelement 4, die Schraubenfeder 7 und das Widerlager 9 umfasst, wird das Widerlager 9 und die Schraubenfeder 7 quer zu den Schenkeln 6 zwischen diesen in das Gleitstück 2 eingesetzt, wobei die Schraubenfeder 7 das Widerlager 9 stirnseitig an das die beiden Schenkeln 6 verbindende Scharnierelement 4 unter Vorspannung andrückt. Zum Festhalten des Widerlagers 9 am Scharnierelement 4 ist das Widerlager 9 mit zwei seitlichen, gegen das Scharnierelement 4 vorstehenden Anschlagstegen 10 versehen, die sich an einer Schulter 11 des Scharnierelements 4 abstützen.

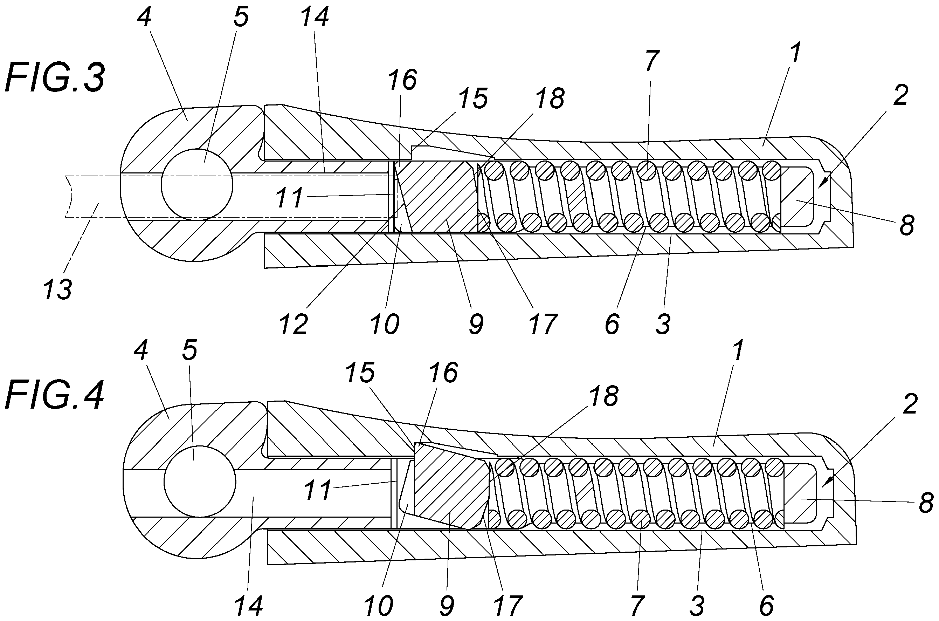

Zwischen den beiden Anschlagstegen 10 bildet das Widerlager 9 eine geneigte Anlauffläche 12, die mithilfe eines in der Fig. 3 strichpunktiert angedeuteten Werkzeugs 13, bspw. eines Druckstifts, durch eine im Scharnierelement 4 zu diesem Zweck vorgesehene Durchtrittsöffnung 14 gegen die Kraft der Schraubenfeder 7 beaufschlagbar ist.

Zur Montage des Federscharniers wird die gemäß den Fig. 1 und 2 vormontierte Montageeinheit in die Gehäuseausnehmung 3 gemäß der Fig. 3 eingeführt, um dann das Widerlager 9 mithilfe des Werkzeugs 13 gegen die Kraft der Schraubenfeder 7 axial zu verschieben, bis das Widerlager 9 im Bereich einer Hinterschneidung 15 der Gehäuseausnehmung 3 freigegeben und aufgrund der geneigten Anlauffläche aus der in der vormontierten Montageeinheit festgehaltenen Entriegelungsstellung in eine Verriegelungsstellung ausgeschwenkt wird, wie dies in der Fig. 4 dargestellt ist. In dieser Verriegelungsstellung hintergreift das Widerlager 9 mit einem Randabschnitt 16 der Anlauffläche 12 die Hinterschneidung 15. Da die Schraubenfeder 7 das Widerlager 9 mit einer Vorspannung an die Hinterschneidung 15 andrückt, wird das Widerlager 9 verschiebefest gegenüber dem Gehäuse 1 festgehalten, sodass das Scharnierelement 4 gegen die Kraft der Schraubenfeder 7 aus der Gehäuseausnehmung 3 gezogen werden kann, bis die Blocklänge der Schraubenfeder 7 den Auszug sperrt.

Um eine flächige Anlage der Rastfläche des Widerlagers 9 an der Hinterschneidung 15 sicherzustellen, muss die Rastfläche gegenüber den Anschlagflächen der Anschlagstege 10 einen Winkel entsprechend dem Schwenkwinkel des Widerlagers 9 zwischen der Entriegelungsstellung und der Verriegelungsstellung aufweisen. Ist die Anlauffläche 12 unter diesem Winkel geneigt, so kann der Randabschnitt 16 dieser Anlauffläche 12 die Rastfläche bilden, sodass sich hinsichtlich der Fertigung einfache Bedingungen ergeben.

Aufgrund der Verschwenkung des Widerlagers 9 zwischen der Entriegelungsstellung und der Verriegelungsstellung empfiehlt es sich, für die Anlage der Schraubenfeder 7 die dieser Schraubenfeder 7 zugekehrte Stirnseite des Widerlagers 9 aus zwei Flächenabschnitten 17, 18 zu bilden, die um den Supplementärwinkel des Schwenkwinkels zwischen der Entriegelungsstellung und der Verriegelungsstellung zueinander geneigt verlaufen, sodass sich in der Entriegelungsstellung die Schraubenfeder 7 am Flächenabschnitt 17 und in der Verriegelungsstellung am Flächenabschnitt 18 abstützt, wobei diese zum Einsatz kommende Flächenabschnitte 17, 18 jeweils senkrecht zur Schraubenfederachse verlaufen.

## Patentansprüche

1. Federscharnier für eine Brille mit einem Gehäuse (1) und mit einem in einer Gehäuseausnehmung (3) verschiebbar geführten, ein Scharnierelement (4) tragenden, U-förmigen Gleitstück (2), das zwischen seinen beiden Schenkeln (6) eine Schraubenfeder (7) aufnimmt, die sich mit einem Ende an einem die beiden Schenkel (6) verbindenden Steg (8) und mit dem anderen Ende an einem zwischen den beiden Schenkeln (6) geführten Widerlager (9) abstützt, das aus einer Entriegelungsstellung in eine Verriegelungsstellung ausschwenkbar ist und in der ausgeschwenkten Verriegelungsstellung eine Hinterschneidung (15) der Gehäuseausnehmung (3) hintergreift, **dadurch gekennzeichnet, dass** das Widerlager (9) in der Entriegelungsstellung durch die Schraubenfeder (7) am die beiden Schenkel (6) des Gleitstücks (2) verbindenden Scharnierelement (4) angedrückt gehalten ist und eine durch eine in Richtung der Schraubenfederachse verlaufende Durchtrittsöffnung (14) im Scharnierelement (4) beaufschlagbare, geneigte Anlauffläche (12) zum Ausschwenken des Widerlagers (9) in die Verriegelungsstellung aufweist.

2. Federscharnier nach Anspruch 1, **dadurch gekennzeichnet, dass** die Anlauffläche (12) des Widerlagers (9) zwischen zwei seitlich neben der Durchtrittsöffnung (14) verlaufenden, gegen das Scharnierelement (4) vorstehenden Anschlagstegen (10) des Widerlagers (9) vorgesehen ist.

3. Federscharnier nach Anspruch 1 oder 2, **dadurch gekennzeichnet, dass** das Widerlager (9) ein in der ausgeschwenkten Verriegelungsstellung flächig an der Hinterschneidung (15) des Gehäuses (1) anliegende Rastfläche aufweist.

4. Federscharnier nach Anspruch 3, **dadurch gekennzeichnet, dass** ein Randabschnitt (16) der Anlauffläche (12) des Widerlagers (9) die die Hinterschneidung (15) des Gehäuses (1) hintergreifende Rastfläche bildet.

5. Federscharnier nach einem der Ansprüche 1 bis 4, **dadurch gekennzeichnet, dass** die die Schraubenfeder (7) abstützende Stirnseite des Widerlagers (9) zwei Flächenabschnitte (17, 18) aufweist, die um den Supplementärwinkel des Schwenkwinkels zwischen der Entriegelungsstellung und der Verriegelungsstellung zueinander geneigt verlaufen.

## Claims

1. Spring hinge for spectacles with a housing (1) and with a U-shaped sliding piece (2) which is displaceably guided in a housing recess (3) and which sliding piece (2) carries a hinge element (4) and accommodates a helical spring (7) between its two limbs (6), which helical spring (7) is supported at one end on a crosspiece (8) connecting the two limbs (6) and at the other end on an abutment (9) guided between the two limbs (6), which abutment (9) can be swung out of an unlocking position into a locking position and engages behind an undercut (15) of the housing recess (3) in the swung-out locking position, **characterized in that**, in the unlocking position, the abutment (9) is held pressed by the helical spring (7) against the hinge element (4) connecting the two limbs (6) of the sliding piece (2) and has an inclined contact surface (12) for pivoting the abutment (9) out into the locking position, wherein the contact surface (12) can be acted upon through a passage opening (14) in the hinge element (4), wherein the passage opening (14) extends in the direction of the helical spring axis.

2. Spring hinge according to claim 1, **characterized in that** the contact surface (12) of the abutment (9) is provided between two stop webs (10) of the abutment (9) extending laterally next to the passage opening (14) and projecting towards the hinge element (4).

3. Spring hinge according to claim 1 or 2, **characterized in that** the abutment (9) has a latching surface which lies flat against the undercut (15) of the housing (1) in the swung-out locking position.

4. Spring hinge according to claim 3, **characterized in that** an edge section (16) of the contact surface (12) of the abutment (9) forms the latching surface engaging behind the undercut (15) of the housing (1).

5. Spring hinge according to one of claims 1 to 4, **characterized in that** the front side of the abutment (9) supporting the helical spring (7) has two surface sections (17, 18) which are inclined to one another by the supplementary angle of the pivot angle between the unlocking position and the locking position.

## Revendications

1. Charnière à ressort pour lunettes, comprenant un boîtier (1) et une pièce coulissante en forme de U (2) qui est guidée de façon coulissante à l'intérieur d'un évidement (3) du boîtier, qui est pourvue d'un élément de charnière (4) et qui reçoit entre ses deux branches (6) un ressort hélicoïdal (7) qui s'appuie par une extrémité sur une barrette (8) qui relie les deux branches (6) et par l'autre extrémité sur une butée (9) qui est guidée entre les deux branches (6), qui est capable de basculer à partir d'une position de déverrouillage jusqu'à une position de verrouillage et qui, dans la position de verrouillage basculée vers l'extérieur, s'engage derrière une contre-dépouille (15) de l'évidement (3) du boîtier, **caractérisée en ce que** la butée (9) est maintenue pressée dans la position de déverrouillage par le ressort hélicoïdal (7) sur l'élément de charnière (4) qui relie les deux branches (6) de la pièce coulissante (2) et présente une surface de butée inclinée (12) qui peut être sollicitée par une ouverture de passage (14) qui s'étend dans la direction de l'axe du ressort hélicoïdal dans l'élément de charnière (4) dans le but de faire basculer la butée (9) dans la position de verrouillage.

2. Charnière à ressort selon la revendication 1, **caractérisée en ce que** la surface de butée (12) de la butée (9) est prévue entre deux nervures de butée (10) de la butée (9) qui s'étendent latéralement à côté de l'ouverture de passage (14) et qui font saillie contre l'élément de charnière (4).

3. Charnière à ressort selon la revendication 1 ou 2, **caractérisée en ce que** la butée (9) présente une surface de verrouillage qui repose à plat sur la contre-dépouille (15) du boîtier (1) dans la position de verrouillage basculée.

4. Charnière à ressort selon la revendication 3, **caractérisée en ce qu'**une partie de bord (16) de la surface de butée (12) de la butée (9) forme la surface de verrouillage qui s'engage derrière la contre-dépouille (15) du boîtier (1).

5. Charnière à ressort selon l'une quelconque des revendications 1 à 4, **caractérisée en ce que** la face avant de la butée (9) qui supporte le ressort hélicoïdal (7) présente deux parties de surface (17, 18) qui sont inclinées l'une par rapport à l'autre de l'angle complémentaire à l'angle de basculement entre la position de déverrouillage et la position de verrouillage.
